# FASCICULE DE BREVET EUROPEEN

(11) **EP 2 324 228 B1**
(45) Date de publication et mention de la délivrance du brevet: **29.05.2013**
(21) Numéro de dépôt: 09802531.5
(22) Date de dépôt: 31.07.2009
(51) Int. Cl.: F02M 25/07, F01N 3/021

(54) **DISPOSITIF DE FILTRATION POUR GAZ D'ECHAPPEMENT**
FILTRIERVORRICHTUNG FÜR ABGASE
FILTRATION DEVICE FOR EXHAUST GASES

(30) Priorité: 31.07.2008 FR 0804364
(43) Date de publication de la demande: 25.05.2011
(73) Titulaire: Valeo Systèmes de Contrôle Moteur, 95800 Cergy Saint Christophe (FR)
(72) Inventeur: ALBERT, Laurent, 60640 VERDERIE (FR); PEYRAZAT, Stéphane, F-60530 Le Mesnil-en-Thelle (FR)
(74) Mandataire: Gevers France
(86) Numéro de dépôt international: PCT/EP2009/059947
(87) Numéro de publication internationale: WO 2010/012827

(56) Documents cités:
- EP-A- 0 010 384
- WO-A-03/067044
- WO-A-2007/012511
- WO-A-2008/133891
- DE-A1- 3 833 957
- DE-A1-102005 028 606
- DE-A1-102006 038 706
- FR-A- 2 920 821
- US-A- 4 673 423

## Description

### DOMAINE DE L'INVENTION

L'invention concerne le domaine des moteurs thermiques. Elle concerne plus particulièrement la recirculation des gaz d'échappement à l'admission, communément dénommée « EGR » (Exhaust Gaz Recirculation).

### ARRIERE PLAN DE L'INVENTION

Dans un moteur thermique, les systèmes EGR permettent de réinjecter vers l'admission une portion des gaz d'échappement afin notamment de réduire les émissions polluantes, et ce grâce à un conduit de recirculation reliant le conduit d'échappement au conduit d'admission. Dans les moteurs thermiques équipés d'un turbocompresseur et d'un filtre à particules, il est connu, selon une architecture dite « EGR basse pression », de disposer un tel conduit de recirculation entre la sortie du filtre à particules et l'entrée du compresseur.

Cependant, des éclats de filtre à particules (en général, de la céramique) peuvent s'arracher de celui-ci notamment lors des premières heures de fonctionnement. De plus, le filtre à particules peut se fissurer en fonctionnement ce qui a pour conséquence l'émission de suies en sortie de ce dernier. Ces éclats de filtre à particules et ces suies sont amenés à circuler dans le conduit de recirculation et dans le compresseur en encrassant voire en endommageant les éléments présents sur le conduit de recirculation, tels qu'échangeurs ou vannes de régulation, ainsi que les pales du compresseur.

Le document WO2008/007808 propose de détecter dans le conduit de recirculation la présence de corps nuisibles issus du filtre à particules et, en réaction, de fermer le conduit de recirculation. La recirculation des gaz d'échappement n'est alors plus opérationnelle.

Le document WO2006/126993 propose quant à lui de prévoir notamment un turbocompresseur dont les pales du compresseur sont renforcées en vue de résister au passage des corps nuisibles issus du filtre à particules, ce qui augmente le coût du turbocompresseur.

Le document DE10113449 propose enfin de relier le conduit de recirculation en amont du filtre à air afin que ce dernier filtre également les corps nuisibles issus du filtre à particules. En variante, il est prévu de placer un filtre supplémentaire entre l'échangeur disposé sur le conduit de recirculation et le compresseur.

Le document DE 38 33 957 décrit un filtre qui définit la paroi de la voie annulaire guidant les gaz d'échappement. La ligue EGR ne comporte pas de filtre.

Il a également été proposé de filtrer à nouveau les gaz d'échappement en aval du filtre à particules pour stopper le passage d'éventuelles particules nuisibles issues du filtre à particules dans la boucle EGR, ce qui peut causer des problèmes de pertes de charge pour les gaz d'échappement.

### OBJET DE L'INVENTION

L'invention a pour but de fournir un dispositif de filtration permettant de ne pas faire une subir une perte de charge à au moins une fraction des gaz d'échappement le traversant.

### BREVE DESCRIPTION DE L'INVENTION

A cet effet, l'invention concerne un dispositif de filtration de gaz d'échappement d'un moteur thermique, selon la revendication 1. On entend par là que seule une partie des gaz d'échappement pénétrant dans ledit corps traverse le média filtrant.

Un tel dispositif de filtration permet de protéger à moindre coût l'ensemble des éléments du conduit de recirculation et le compresseur. Il présente trois voies de circulation (une entrée et deux sorties) permettant de le positionner avantageusement entre le conduit d'échappement et le conduit de recirculation.

Les pertes de charges induites par la présence du filtre peuvent être réduites en laissant libre la voie entre l'entrée des gaz d'échappement et la sortie des gaz d'échappement, notamment lorsque le corps est une pièce annulaire adaptée à être disposée à l'intérieur du conduit d'échappement, de sorte que le dispositif de filtration est adapté à réaliser une première filtration en permettant aux gaz d'échappement de le traverser de part en part sans passer par le media filtrant.

Lesdits moyens de filtration sont, par exemple, adaptés au traitement des gaz circulant entre un filtre à particules et un échangeur EGR.

Selon d'autres caractéristiques préférées, prises seules ou en combinaison :
- la sortie EGR comporte un orifice pratiqué sur la périphérie dudit corps en forme de pièce annulaire ;
- le corps comporte un canal central débouchant de part et d'autre du corps, l'une des extrémités débouchante de ce canal central définissant ladite entrée de gaz d'échappement et l'autre des extrémités débouchante de ce canal central définissant ladite sortie d'évacuation des gaz d'échappement ;
- le corps est un tube dont la paroi, qui est creuse, renferme le media filtrant et dont l'espace vide central constitue ledit canal central ;
- le corps de forme tubulaire comporte un flasque amont et un flasque aval reliés par un premier cylindre constituant la périphérie interne de ladite paroi creuse et définissant ledit canal central ;
- le corps comporte en outre un deuxième cylindre constituant la périphérie externe de ladite paroi creuse, ce deuxième cylindre comportant un orifice définissant la sortie EGR ;
- le dispositif comporte des moyens de prélèvement des gaz d'échappement circulant dans le canal central, ces moyens étant adaptés à diriger lesdits gaz prélevés vers la sortie EGR via le media filtrant ;
- les moyens de prélèvement comportent des perforations pratiquées dans le premier cylindre et le media filtrant est disposé coaxialement autour de ce premier cylindre ;
- le dispositif comporte des moyens de prélèvement des gaz d'échappement à proximité du flasque aval, ces moyens étant adaptés à diriger lesdits gaz prélevés vers la sortie EGR via le media filtrant ;
- les moyens de prélèvement comportent des perforations pratiquées dans le flasque aval et le media filtrant est disposé en tubes centrés chacun sur une perforation ;
- le corps comporte un cône convergeant vers l'entrée de gaz d'échappement ;
- le media filtrant présente une forme de cône divergeant à partir de la sortie d'évacuation des gaz d'échappement, les deux cônes convergeant l'un vers l'autre et étant reliés au niveau d'une ouverture.

Autrement dit, ledit corps est muni, par exemple, d'une voie, dite voie EGR, pour la circulation desdits gaz d'échappement recirculés, ladite voie EGR comprenant ledit média filtrant, et d'une voie, dite voie d'échappement, pour la circulation de l'autre fraction des gaz d'échappement.

La voie EGR et la voie d'échappement sont ainsi configurées pour que l'autre fraction des gaz d'échappement ne traverse pas le média filtrant et sorte directement du corps, sans perte de charges substantielle.

Ledit corps comprend en outre, par exemple, une enveloppe externe cylindrique et ladite voie EGR débouche dudit corps au niveau d'une sortie, dite sortie EGR, pour les gaz d'échappement recirculée, pratiquée sur ladite enveloppe.

Selon un premier mode de réalisation, ladite voie d'échappement débouche dudit corps au niveau d'une sortie, dite sortie d'évacuation des gaz d'échappement, pour ladite autre fraction de gaz d'échappement, et ledit corps comporte un canal débouchant de part et d'autre du corps, l'une des extrémités dudit canal définissant ladite sortie d'évacuation des gaz d'échappement.

Selon ce premier mode de réalisation, l'autre des extrémités dudit canal pourra définir une entrée de gaz d'échappement dans ledit corps.

Toujours selon ce premier mode de réalisation, ledit corps pourra comporter un flasque amont et un flasque aval, reliés par un premier cylindre définissant ledit canal et un second cylindre constitué de ladite enveloppe, ladite voie EGR étant prévue entre lesdits premier et second cylindres.

Ledit flasque amont ou ledit flasque aval est muni, par exemple, d'une pluralité de perforations autorisant une introduction de la fraction des gaz d'échappement constituant lesdits gaz d'échappement recirculés dans la voie EGR.

Le media filtrant est alors constitué, par exemple, de tubes communiquant avec lesdites perforations par l'une de leur extrémité, les parois latérales des tubes étant formées de matériau filtrant.

Chaque dit tube du média filtrant est, notamment, centré sur une dite perforation et s'étend selon l'axe longitudinal du canal.

Lesdits tubes s'étendent, par exemple, entre lesdits flasques et sont fermés à leur autre extrémité par le flasque ne portant pas de perforations.

Selon un second mode de réalisation, le média filtrant se présente sous la forme d'un anneau s'étendant dans un plan incliné ou perpendiculaire à l'enveloppe externe.

Ledit corps pourra alors comprendre un tronc de cône, dit d'entrée, définissant au niveau de sa grande base une entrée pour les gaz d'échappement dans ledit corps.

Selon un premier exemple de ce second mode de réalisation, ledit tronc de cône d'entrée converge vers un canal définissant un passage pour les gaz d'échappement, le volume défini entre ledit canal, ledit tronc de cône d'entrée et ladite enveloppe externe du corps étant fermé en partie basse par ledit média filtrant.

Selon un autre exemple de ce second mode de réalisation, ledit media filtrant présente une forme de tronc de cône divergeant à partir de la petite base dudit tronc de cône d'entrée, lesdits troncs de cônes étant relié au niveau d'une ouverture.

Selon une variante, ledit corps pourra présenter une chambre torique dont les parois latérales sont définies par ledit média filtrant, la voie d'échappement passant le long de l'axe de ladite chambre.

Selon une autre variante, ledit média filtrant comprend une pluralité d'anneaux, s'étendant partiellement vers ladite enveloppe externe, lesdits anneaux étant prévus à distance les uns des autres le long de l'axe longitudinal dudit corps, chaque anneau présentant une face en regard d'un volume relié à un canal dirigeant ladite autre fraction des gaz d'échappement vers une sortie desdits gaz et une face en regard d'un volume relié à la sortie EGR.

Un autre objet de l'invention vise un système de recirculation de gaz d'échappement pour moteur thermique, comportant :
- un conduit d'échappement pour le moteur thermique, muni d'un filtre à particules
- un conduit d'admission pour le moteur thermique
- un conduit EGR relié par l'une de ses extrémités au conduit d'échappement, en aval du filtre à particules, et par l'autre de ses extrémités au conduit d'admission
caractérisé en ce qu'il comporte en outre un dispositif de filtration tel que décrit ci-dessus, disposé dans le conduit d'échappement à proximité de la sortie du filtre à particules, et en ce que le conduit EGR est relié à la sortie EGR du dispositif de filtration.

Ce système peut en outre comporter des moyens de régénération de filtre par élévation de température, ces moyens de régénération agissant périodiquement sur le filtre à particules et sur ledit dispositif de filtration.

Des moyens de régénération de filtre par élévation de température sont couramment employés pour nettoyer les filtres à particules. Il s'agit de procédés connus selon lesquels, par exemple, on enflamme les gaz d'échappement de sorte que le filtre à particules, qui est en contact avec ces gaz d'échappement, voit sa température portée à plus de 600°C afin de provoquer la combustion des particules qui y sont piégées. Une telle régénération se déclenche en général périodiquement, par exemple tous les 1000 kilomètres, afin d'éviter l'encrassement et le bouchage du filtre à particules.

Ici, la régénération du filtre à particules est mise à profit pour également régénérer le dispositif de filtration destiné aux gaz recirculés.

A ce titre, un autre objet de l'invention vise un procédé de nettoyage du dispositif de filtration d'un système tel que décrit ci-dessus, caractérisé en ce qu'il comporte l'étape de régénérer le filtre à particules par élévation de la température, cette régénération entraînant le nettoyage du dispositif de filtration.

### BREVE DESCRIPTION DES DESSINS

L'invention sera mieux comprise à la lumière de la description qui va suivre d'un exemple de mise en oeuvre préféré et non limitatif, description faite en référence aux dessins annexés, parmi desquels :
- la figure 1 est une vue schématique d'une architecture moteur dotée d'un système de recirculation « basse pression » ;
- la figure 2 est une vue schématique d'un premier mode de réalisation d'un dispositif de filtration selon l'invention ;
- les figures 3a, 3b et 3c sont des vues en perspective d'un dispositif de filtration selon une variante du premier mode de réalisation ;
- la figure 4 est une vue schématique d'un deuxième mode de réalisation d'un dispositif de filtration selon l'invention ;
- les figures 5a, 5b et 5c sont des vues en perspective d'un dispositif de filtration selon une première variante du deuxième mode de réalisation ;
- les figures 6a, 6b et 6c sont des vues en perspective d'un dispositif de filtration selon une deuxième variante du deuxième mode de réalisation ;
- les figures 7a, 7b et 7c sont des vues en perspective d'un dispositif de filtration selon une troisième variante du deuxième mode de réalisation,
- les figures 8 et 9 sont des vues schématiques, illustrant selon un plan de coupe radiale, d'autre variante de réalisation de l'invention.

### DESCRIPTION DETAILLEE DE L'INVENTION

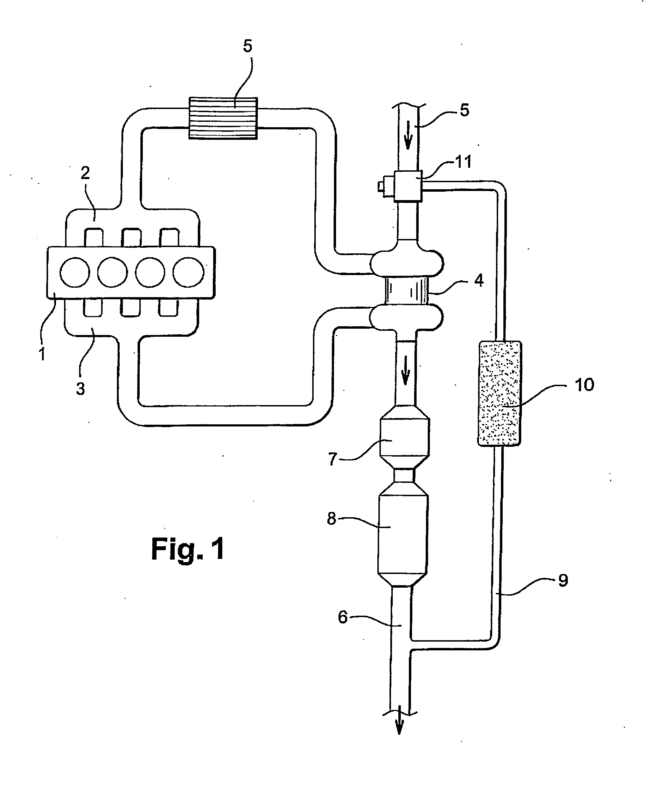

La figure 1 représente schématiquement une architecture moteur munie d'un système de recirculation de gaz d'échappement dite « basse pression ». Le moteur 1 est alimenté en gaz frais par un collecteur d'admission 2 et rejette ses gaz brûlés dans un collecteur d'échappement 3. Un turbocompresseur 4 permet de comprimer les gaz d'admission en étant entraîné par les gaz d'échappement. Un échangeur d'admission 5 permet d'abaisser la température des gaz d'admission. Un conduit d'admission 5 alimente le compresseur du turbocompresseur 4 en air frais tandis qu'un conduit d'échappement 6 évacue les gaz brûlés à la sortie de la turbine du turbocompresseur 4 en leur faisant traverser un catalyseur 7 et un filtre à particules 8.

Le système de recirculation permet ici de prélever des gaz d'échappement en aval du filtre à particules 8, via un conduit de recirculation 9 sur lequel est disposé un échangeur EGR 10 et une vanne de régulation EGR 11.

Selon l'invention, il est prévu un dispositif de filtration disposé entre le filtre à particules 8 et l'échangeur EGR 10. Ce dispositif est décrit plus en détails ci-dessous.

Les termes « amont » et « aval » utilisés dans la présente description se réfèrent toujours au sens d'écoulement des gaz dans les conduits.

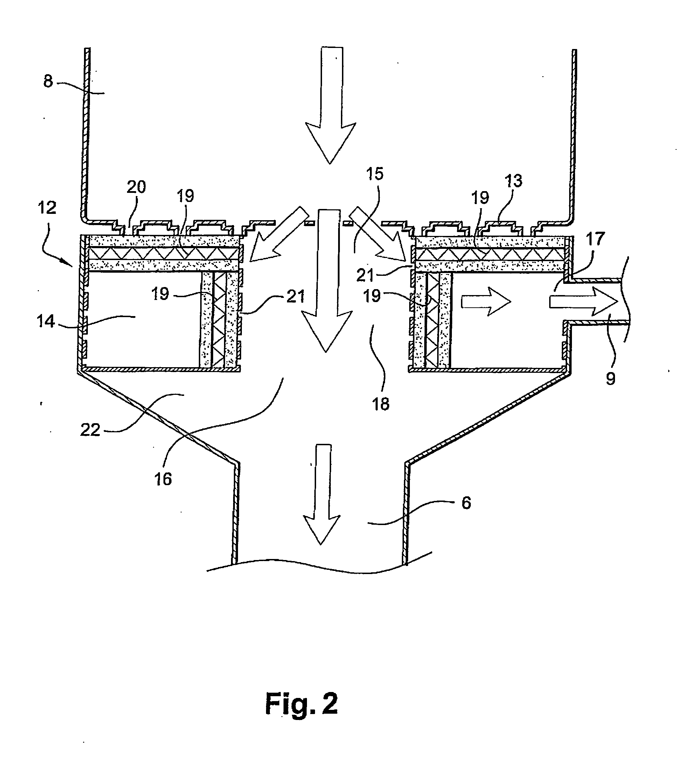

La figure 2 montre un premier mode de réalisation du dispositif de filtration 12 selon une vue schématique en coupe longitudinale. L'extrémité aval du filtre à particules 8 est visible sur cette figure et sa sortie est schématisée par le trait pointillé 13.

Le dispositif de filtration 12 comporte un corps annulaire 14 présentant une entrée 15 de gaz d'échappement, une sortie 16 d'évacuation des gaz d'échappement, et une sortie EGR 17 reliée au conduit de recirculation 9.

Le corps annulaire 14 définit un canal central 18 dont l'entrée correspond à l'entrée 15 de gaz d'échappement et dont la sortie correspond à la sortie 16 d'évacuation des gaz d'échappement. Ce corps annulaire 14 renferme de plus un media filtrant 19 disposé contre la paroi aval 20 et/ou contre la paroi 21 du canal central 18. Ces parois recevant le media filtrant sont adaptées à laisser entrer les gaz d'échappement et sont représentées en pointillés. Elles peuvent être perforées, munies d'une grille ou de tout autre moyen poreux.

Les gaz d'échappement sortant du filtre à particules 8 traversent le canal central sans être perturbés par le media filtrant, ce qui réduit les pertes de charges liées à la présence du dispositif de filtration 12. Par ailleurs, parmi les corps nuisibles destinés à être écartés du conduit de recirculation 9, les corps les plus gros traversent directement le canal central en étant entraînés par la vitesse des gaz d'échappement, ce qui permet un premier filtrage.

Les gaz d'échappement destinés à être recirculés dans le conduit 9 sont prélevés sur le flux de gaz d'échappement par les parois 20 et/ou 21 associées au media filtrant 19. Ce deuxième filtrage élimine alors les particules les plus fines de sorte que les gaz recirculés n'entraînent plus de particules nuisibles aux composants du circuit EGR ou au turbocompresseur.

Le dispositif de filtration 12 est ici disposé contre la sortie 13 du filtre à particules 8 et un convergeant 22 assure la liaison entre le dispositif de filtration 12 et le conduit d'échappement 6.

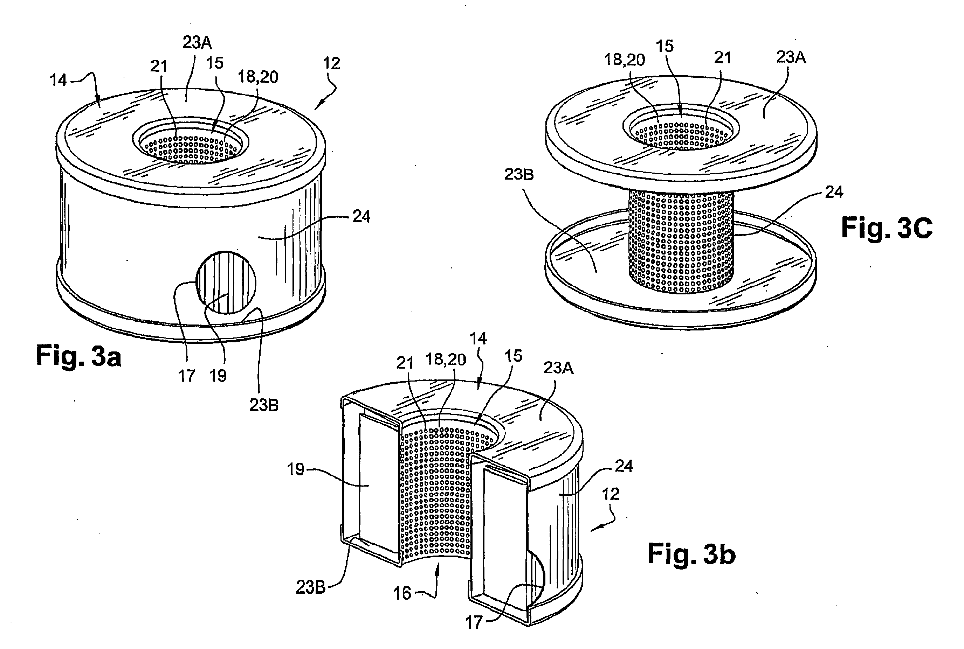

Une variante de ce mode de réalisation est représentée aux figures 3a à 3c. Selon cette variante, les gaz d'échappement destinés à être recirculés ne sont prélevés que sur la paroi du canal central 18.

Le même numéro de référence sur les figues est utilisé pour chaque élément commun aux différents modes de réalisation et variantes.

Sur ces figures 3a à 3c, le corps annulaire 14 du dispositif de filtration 12 est réalisé par deux flasques circulaires 23A, 23B ajourés en leur centre et reliés entre eux, au niveau du centre, par un cylindre perforé 21 et, au niveau de la périphérie, par un cylindre 24 sur lequel une ouverture unique définit la sortie EGR 17. Les liaisons peuvent se faire par soudure, ajustement, ou tout autre moyen connu.

Le media filtrant est disposé concentriquement aux cylindres 21 et 24 de sorte que les gaz d'échappement destinés à la recirculation sont prélevés au niveau du cylindre 21, traversent le media filtrant 19 et sortent par la sortie EGR 17.

Le corps 14 est donc ici un tube à paroi creuse (l'épaisseur de la paroi étant définie par la distance entre les cylindres 21 et 24) dont l'espace vide central constitue le canal central 18 et dont la paroi creuse renferme le media filtrant 19. Le cylindre 24 définit la périphérie externe de cette paroi creuse du tube, tandis que le cylindre 21 en défini la périphérie interne.

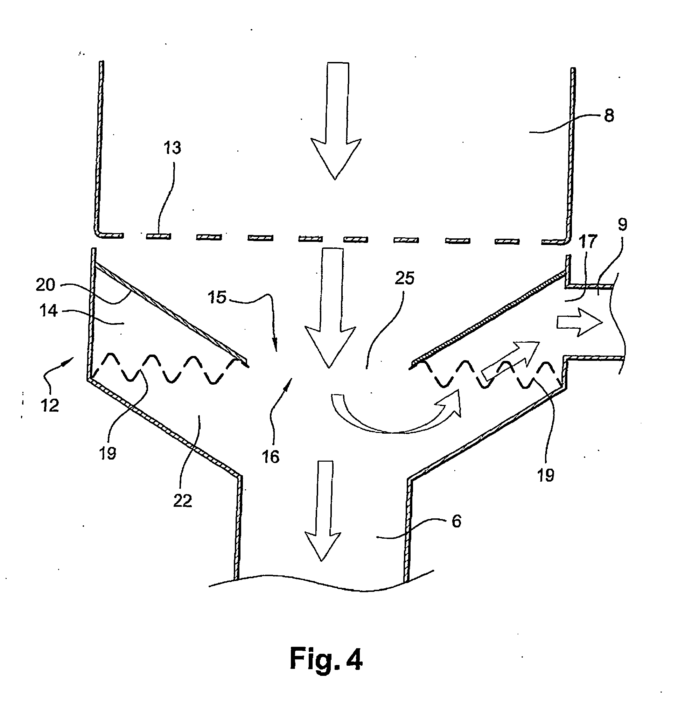

En référence à la figure 4 et suivantes, un deuxième mode de réalisation va être décrit. Selon ce mode de réalisation, les gaz d'échappement destinés à la recirculation sont prélevés uniquement en aval du flux d'échappement.

Sur la figure 4, qui est une vue schématique en coupe représentant ce deuxième mode réalisation, le corps 14 du dispositif de filtration comporte ici une paroi aval 20 qui n'est pas perforée et qui canalise tout le flux d'échappement vers une ouverture centrale 25. Le media filtrant 19 est disposé entre cette ouverture 25 et la périphérie du corps 14.

Les gaz d'échappement traversent ainsi l'ouverture 25 en direction du conduit d'échappement 6, comme dans le premier mode de réalisation, et une portion de ces gaz est ici prélevée au niveau du media filtrant 19, c'est-à-dire après avoir changé de sens d'écoulement. Les gaz d'échappement destinés à l'EGR sont ainsi contraints à revenir en arrière par une chicane, ce qui améliore encore le premier filtrage.

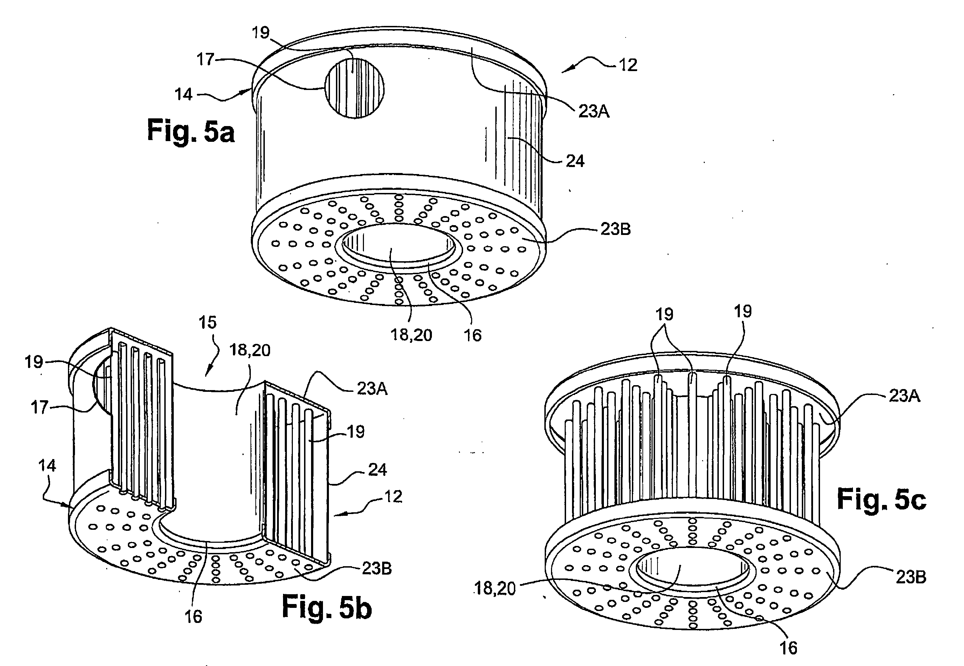

Une première variante de ce mode de réalisation est représentée aux figures 5a à 5c. Le dispositif de filtration 12 comporte ici un corps 14 d'une structure identique à celle des figures 3a à 3c si ce n'est que le cylindre 21 n'est pas perforé et que le flasque aval 23B est, lui, perforé.

Pour chacune des perforations du flasque aval 23B, le media filtrant 19 est agencé en tubes dont une seule extrémité est débouchante, cette dernière étant centrée sur la perforation correspondante (voir figure 5b).

Le dispositif de filtration 12 conforme au deuxième mode de réalisation permet d'effectuer un prélèvement de gaz d'échappement à partir du flasque aval 23B en forçant les gaz destinés à l'EGR à faire demi-tour par rapport aux flux d'échappement.

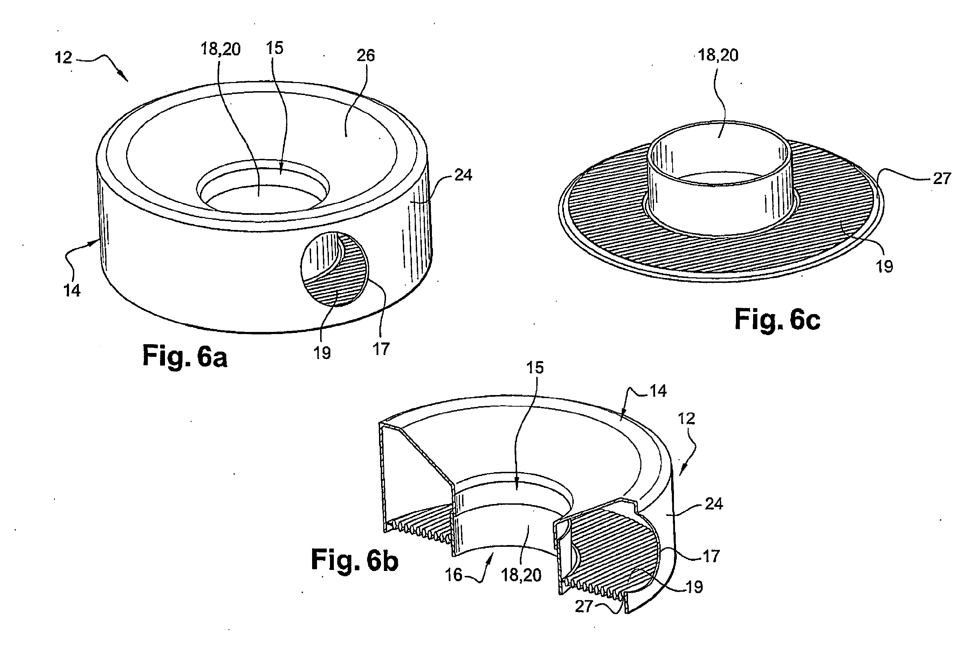

Les figures 6a à 6c représentent une deuxième variante du deuxième mode de réalisation. Le corps 14 est ici formé d'un cône convergeant 26 relié à un cylindre externe 24 et relié à un cylindre interne 21 non perforé.

Le media filtrant 19 est monté sur un cadre annulaire rigide 27 et cet ensemble joue ici le rôle de flasque aval tout en permettant le prélèvement de gaz d'échappement conforme au deuxième mode de réalisation.

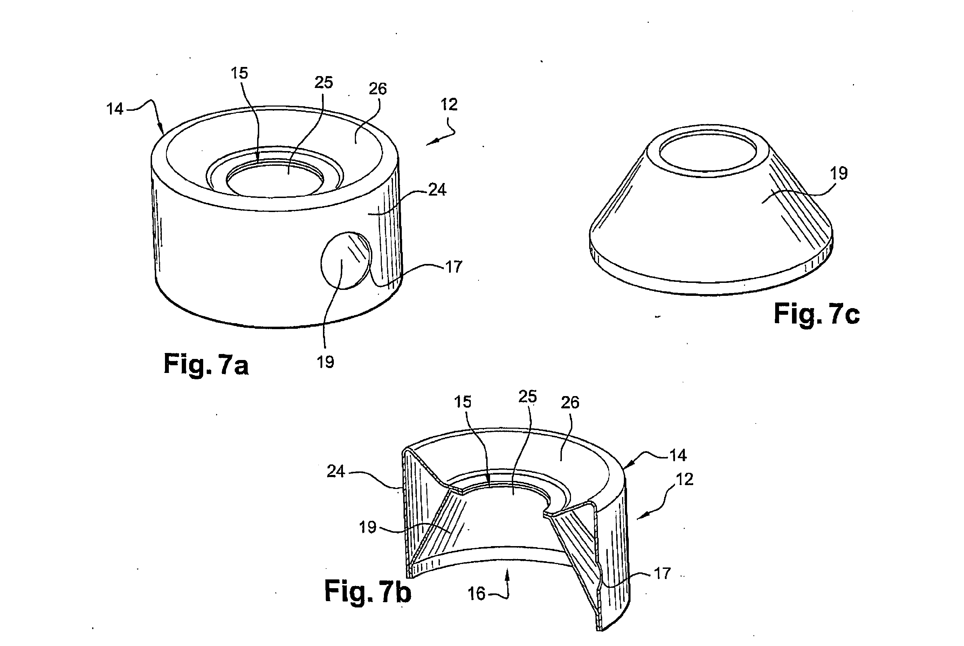

En référence à la figure 7, une troisième variante de ce deuxième mode de réalisation prévoit également un cône convergeant 26 lié à un cylindre externe 24 pour la réalisation du corps 14. Toutefois, le corps 14 ne comporte pas d'autres constituants et le media filtrant, en forme de cône divergeant, est directement relié au cône convergeant 26 sur tout le pourtour de l'ouverture 25. La périphérie du cône divergeant formé par le media filtrant est de plus reliée sur tout son pourtour à la circonférence aval du cylindre externe 24.

L'ouverture 25 constitue ici à la fois l'entrée de gaz d'échappement et la sortie d'évacuation des gaz d'échappement.

Par ailleurs, pour chacune des variantes de ce deuxième mode de réalisation, notons que, si l'on retourne le dispositif de filtration 14 dans son logement (ce qui revient à intervertir l'amont et l'aval), il devient alors conforme au premier mode de réalisation.

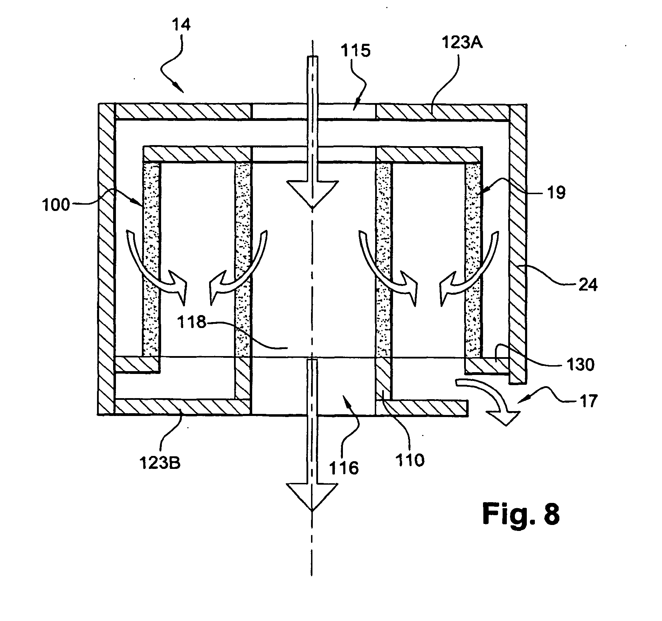

Selon l'exemple de réalisation illustré à la figure 8, ledit corps 14 présente une chambre torique 100 dont les parois latérales sont définies par ledit média filtrant 19. Un canal central 118 est défini le long de l'axe de ladite chambre pour ladite voie d'échappement.

Le corps 14 est muni, par exemple, d'un flasque amont 123A et aval 123B, respectivement muni d'un orifice d'entrée 115 pour les gaz d'échappement et d'un orifice de sortie 116 pour ladite autre fraction des gaz d'échappement, c'est-à-dire la fraction qui n'est pas recirculée. Lesdits orifice d'entrée 115 et de sortie 116 sont prévus communiquant avec ledit canal central 118.

Ladite chambre torique 100 est prévue à distance dudit flasque amont 123A. Pour cela, elle pourra prendre appui, par exemple par l'intermédiaire d'une entretoise annulaire 110, prolongeant ledit canal 118, sur le flasque aval 123B.

Ladite chambre torique 100 est, par exemple, ouverte en partie basse, c'est-à-dire dans sa partie se trouvant en vis-à-vis du flasque aval 123B, pour le passage des gaz d'échappement recirculés en direction de la sortie EGR 17.

Un cloison annulaire 130 s'étend entre l'enveloppe extérieure 24 du corps et la paroi latérale externe de ladite chambre torique 100, au niveau de l'extrémité aval de celle-ci, pour éviter un passage directe des gaz d'échappement recirculés vers ladite sortie EGR.

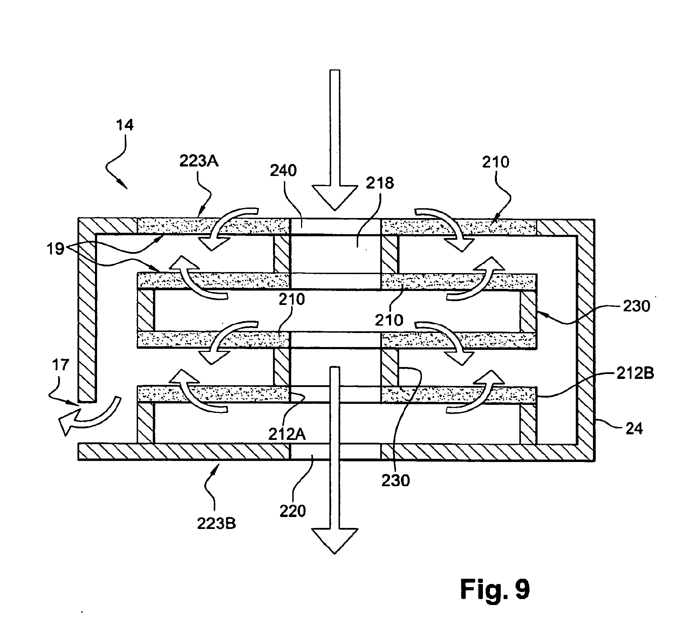

Selon l'exemple de réalisation illustré figure 9, ledit média filtrant comprend une pluralité d'anneaux 210, s'étendant partiellement vers ladite enveloppe externe 24. Lesdits anneaux sont, par exemple, orientés orthogonalement par rapport à l'axe longitudinal dudit corps 14, sont de dimension identique et/ou sont coaxiaux.

Ils sont prévus à distance les uns des autres le long de l'axe longitudinal dudit corps, chaque anneau 210 présentant une face en regard d'un volume relié à un canal 218 dirigeant ladite autre fraction des gaz d'échappement vers une sortie 220 desdits gaz et une face en regard d'un volume relié à la sortie EGR 17.

Pour cela, lesdits anneaux 210 pourront être reliés par des entretoises 230, prévus alternativement, le long de l'axe dudit corps 14, au niveau de la couronne interne 212A et de la couronne externe 212B desdits anneaux.

Le corps 14 est équipé, par exemple d'un flasque amont 223A, intégrant l'anneaux le plus amont dans le trajet des gaz, l'orifice interne dudit anneau le plus en amont constituant un orifice d'entrée 240 les gaz d'échappement, et d'un flasque externe 223B comportant l'orifice de sortie 220 pour la fraction des gaz d'échappement non-recirculés. L'entretoise la plus en aval pourra être assujettie audit flasque aval 223B.

Un avantage de l'ensemble des modes de réalisation évoqués plus haut est que la surface de média filtrant ne dépend plus, ou en tout cas plus seulement, de la longueur axiale dudit corps 14.

Les dispositifs de filtration 14, lorsqu'ils sont disposés à proximité de la sortie du filtre à particules 8, comme c'est le cas sur les figures 2 et 4, peuvent être nettoyés facilement, c'est-à-dire débarrassés des impuretés accumulées dans le media filtrant 19, lors de la régénération du filtre à particules 8.

Par tout moyen connu, la température des gaz d'échappement est augmentée jusqu'à ce que le filtre à particules atteigne une température supérieure à 600°C de sorte à procéder à sa régénération de manière classique. Le dispositif de filtration étant placé dans le conduit d'échappement 6, à proximité de la sortie du filtre à particules 8, sa température se voit également portée à une valeur supérieure à 600°C et les impuretés contenue dans le media filtrant 19 sont de ce fait brûlées.

Le dispositif de filtration 14 et le filtre à particules peuvent être encapsulés dans un même boîtier. Ce boîtier aurait alors une entrée de gaz d'échappement, une sortie d'évacuation des gaz d'échappement ainsi qu'une sortie EGR.

En ce qui concerne le media filtrant 19, de même que les autres constituants du dispositif de filtration, ils peuvent être constitués d'un quelconque matériau adapté à supporter la température de régénération.

D'autres modes de réalisation peuvent être envisagés sans pour autant sortir du cadre de l'invention. Notamment, les différents modes et variantes de réalisation peuvent être combinés. Par exemple, le cône convergeant 26 peut être ou non utilisé dans chacune des réalisations décrites.

## Revendications

1. Dispositif de filtration de gaz d'échappement d'un moteur thermique (1), notamment Diesel, ledit dispositif comprenant un corps (14) et un média filtrant (19), formant des moyens de filtration, **caractérisé en ce que** ledit corps est apte à diriger une fraction desdits gaz d'échappement, dits gaz d'échappement recirculés, à travers ledit média filtrant (19), ledit corps (14) présentant une entrée (15) de gaz d'échappement, une sortie (16) d'évacuation des gaz d'échappement et une sortie EGR (17); ledit corps (14) étant muni d'une voie, dite voie EGR, pour la circulation desdits gaz d'échappement recirculés, ladite voie EGR comprenant ledit média filtrant (19), et d'une voie, dite voie d'échappement, pour la circulation de l'autre fraction des gaz d'échappement ; le corps (14) comportant un canal central (18) débouchant de part et d'autre du corps (14), l'une des extrémités débouchante de ce canal central définissant ladite entrée (15) de gaz d'échappement et l'autre des extrémités débouchante de ce canal central définissant ladite sortie (16) d'évacuation des gaz d'échappement.

2. Dispositif de filtration selon la revendication 1 dans lequel lesdits moyens de filtration (14, 19) sont adaptés au traitement des gaz circulant entre un filtre à particules (8) et un échangeur EGR (10).

3. Dispositif de filtration selon la revendication 1 ou 2, **caractérisé en ce que** le corps (14) est une pièce adaptée à être disposée à l'intérieur du conduit d'échappement (6) d'un moteur thermique (1).

4. Dispositif de filtration selon la revendication 1, dans lequel la sortie EGR (17) comporte un orifice pratiqué sur la périphérie dudit corps (14) en forme de pièce annulaire.

5. Dispositif de filtration selon la revendication 1, dans lequel le corps (14) est un tube dont la paroi, qui est creuse, renferme le média filtrant (19) et dont l'espace vide central constitue ledit canal central (18).

6. Dispositif de filtration selon la revendication 5, dans lequel le corps (14) de forme tubulaire comporte un flasque amont (23A) et un flasque aval (23B) reliés par un premier cylindre (21) constituant la périphérie interne de ladite paroi creuse et définissant ledit canal central (18).

7. Dispositif de filtration selon l'une des revendications 5 ou 6, dans lequel le corps (14) comporte en outre un deuxième cylindre (24) constituant la périphérie externe de ladite paroi creuse, ce deuxième cylindre comportant un orifice (17) définissant la sortie EGR.

8. Dispositif de filtration selon l'une des revendications 6 ou 7, comportant des moyens de prélèvement des gaz d'échappement circulant dans le canal central (18), ces moyens étant adaptés à diriger lesdits gaz prélevés vers la sortie EGR (17) via le média filtrant (19).

9. Dispositif de filtration selon la revendication 8, dans lequel les moyens de prélèvement comportent des perforations pratiquées dans le premier cylindre (21) et en ce que le média filtrant (19) est disposé coaxialement autour de ce premier cylindre.

10. Dispositif de filtration selon l'une des revendications 6 à 9, comportant des moyens de prélèvement des gaz d'échappement à proximité du flasque aval (23B), ces moyens étant adaptés à diriger lesdits gaz prélevés vers la sortie EGR (17) via le média filtrant (19).

11. Dispositif de filtration selon la revendication 10, dans lequel les moyens de prélèvement comportent des perforations pratiquées dans le flasque aval (23B) et en ce que le média filtrant (19) est disposé en tubes centrés chacun sur une perforation.

12. Dispositif de filtration selon l'une des revendications 1 à 11, dans lequel le corps (14) comporte un cône (26) convergeant vers l'entrée (15) de gaz d'échappement.

13. Dispositif de filtration selon la revendication 12, **caractérisé en ce que** le média filtrant (19) présente une forme de cône divergeant à partir de la sortie (16) d'évacuation des gaz d'échappement, les deux cônes convergeant l'un vers l'autre et étant reliés au niveau d'une ouverture (25).

14. Dispositif selon l'une des revendications 1 à 3 dans lequel ledit corps comprend une enveloppe externe cylindrique (24) et dans lequel la sortie EGR (17), est pratiquée sur ladite enveloppe (24).

15. Dispositif selon la revendication 14 dans lequel le corps (14) comporte un flasque amont (23A) et un flasque aval (23B) reliés par un premier cylindre (21) définissant ledit canal (18) et un second cylindre constitué de ladite enveloppe (24), ladite voie EGR étant prévue entre lesdits premier et second cylindres.

16. Dispositif selon la revendication 15 dans lequel le flasque amont (23A) ou le flasque aval (23B) est muni d'une pluralité de perforations autorisant une introduction de la fraction des gaz d'échappement constituant lesdits gaz d'échappement recirculés dans la voie EGR.

17. Dispositif selon la revendication 16 dans lequel le média filtrant (19) est constitué de tubes communiquant avec lesdites perforations par l'une de leur extrémité, les parois latérales des tubes étant formées de matériau filtrant.

18. Dispositif selon la revendication 17 dans lequel chaque tube du média filtrant (19) est centré sur une dite perforation et s'étend selon l'axe longitudinal du canal (18).

19. Dispositif selon la revendication 18 dans lequel lesdits tubes s'étendent entre lesdits flasques et sont fermés à leur autre extrémité par le flasque ne portant pas ladite pluralité de perforations.

20. Dispositif selon la revendication 14 dans lequel le média filtrant se présente sous la forme d'un anneau s'étendant dans un plan incliné ou perpendiculaire à l'enveloppe externe (24).

21. Dispositif selon la revendication 20 dans lequel ledit corps comprend un tronc de cône (26), dit d'entrée, définissant au niveau de sa grande base une entrée pour les gaz d'échappement dans ledit corps (14).

22. Dispositif selon la revendication 21 dans lequel ledit tronc de cône d'entrée (26) converge vers un canal (18), définissant un passage pour les gaz d'échappement, le volume défini entre ledit canal (18), ledit tronc de cône d'entrée (26) et ladite enveloppe externe (24) du corps étant fermé en partie basse par ledit média filtrant (19).

23. Dispositif selon la revendication 22, dans lequel le média filtrant (19) présente une forme de tronc de cône divergeant à partir de la petite base dudit tronc de cône d'entrée (26), lesdits troncs de cônes étant relié au niveau d'une ouverture (25).

24. Dispositif selon la revendication 14 dans lequel ledit corps présente une chambre torique (100) dont les parois latérales sont définies par ledit média filtrant (19).

25. Dispositif selon la revendication 14 dans lequel ledit média filtrant comprend une pluralité d'anneaux (210), lesdits anneaux (210) étant prévus à distance les uns des autres le long de l'axe longitudinal dudit corps, chaque anneau (210) présentant une face en regard d'un volume relié à un canal (218) dirigeant ladite autre fraction des gaz d'échappement vers une sortie (220) desdits gaz et une face en regard d'un volume relié à la sortie EGR (17).

26. Système de recirculation de gaz d'échappement pour moteur thermique, comportant : un conduit d'échappement (6) pour le moteur thermique (1), muni d'un filtre à particules (8) un conduit d'admission (5) pour le moteur thermique (1) un conduit EGR (9) relié par l'une de ses extrémités au conduit d'échappement (6), en aval du filtre à particules (8), et par l'autre de ses extrémités au conduit d'admission (5) **caractérisé en ce qu'**il comporte en outre un dispositif de filtration (12) selon l'une des revendications 4 à 13 disposé dans le conduit d'échappement (6) à proximité de la sortie du filtre à particules (8), et **en ce que** le conduit EGR (9) est relié à la sortie EGR (17) du dispositif de filtration (12).

27. Système EGR selon la revendication 26, comportant en outre des moyens de régénération de filtre par élévation de température, ces moyens de régénération agissant périodiquement sur le filtre à particules (8) et sur ledit dispositif de filtration (12).

28. Procédé de nettoyage du dispositif de filtration d'un système conforme à l'une des revendications 26 ou 27, **caractérisé en ce qu'**il comporte l'étape de régénérer le filtre à particules (8) par élévation de la température, cette régénération entraînant le nettoyage du dispositif de filtration (12).

## Patentansprüche

1. Vorrichtung zum Filtern von Abgasen eines Verbrennungsmotors (1), insbesondere eines Dieselmotors, wobei die Vorrichtung einen Körper (14) und ein Filtermedium (19) enthält, die Filtereinrichtungen bilden, **dadurch gekennzeichnet, dass** der Körper einen Anteil der Abgase, rückgeführte Abgase genannt, durch das Filtermedium (19) lenken kann, wobei der Körper (14) einen Abgaseingang (15), einen Ableitungsausgang (16) der Abgase und einen AGR-Ausgang (17) aufweist; wobei der Körper (14) mit einem Pfad, AGR-Pfad genannt, für die Zirkulation der rückgeführten Abgase, wobei der AGR-Pfad das Filtermedium (19) enthält, und mit einem Pfad, Abgaspfad genannt, für die Zirkulation des anderen Anteils der Abgase versehen ist; wobei der Körper (14) einen zentralen Kanal (18) aufweist, der auf beiden Seiten des Körpers (14) mündet, wobei eines der Mündungsenden dieses zentralen Kanals den Abgaseingang (15) und das andere der Mündungsenden dieses zentralen Kanals den Ableitungsausgang (16) der Abgase definiert.

2. Filtervorrichtung nach Anspruch 1, wobei die Filtereinrichtungen (14, 19) zur Behandlung der zwischen einem Partikelfilter (8) und einem AGR-Tauscher (10) zirkulierenden Gase geeignet sind.

3. Filtervorrichtung nach Anspruch 1 oder 2, **dadurch gekennzeichnet, dass** der Körper (14) ein Bauteil ist, das geeignet ist, um im Inneren der Abgasleitung (6) eines Verbrennungsmotors (1) angeordnet zu werden.

4. Filtervorrichtung nach Anspruch 1, wobei der AGR-Ausgang (17) eine Öffnung aufweist, die auf dem Umfang des Körpers (14) in Form eines ringförmigen Bauteils ausgebildet ist.

5. Filtervorrichtung nach Anspruch 1, wobei der Körper (14) ein Rohr ist, dessen Wand, die hohl ist, das Filtermedium (19) umschließt und dessen zentraler Leerraum den zentralen Kanal (18) bildet.

6. Filtervorrichtung nach Anspruch 5, wobei der rohrförmige Körper (14) einen vorderen Flansch (23A) und einen hinteren Flansch (23B) aufweist, die durch einen ersten Zylinder (21) verbunden sind, der den Innenumfang der Hohlwand bildet und den zentralen Kanal (18) definiert.

7. Filtervorrichtung nach einem der Ansprüche 5 oder 6, wobei der Körper (14) außerdem einen zweiten Zylinder (24) aufweist, der den äußeren Umfang der Hohlwand bildet, wobei dieser zweite Zylinder eine Öffnung (17) aufweist, die den AGR-Ausgang definiert.

8. Filtervorrichtung nach einem der Ansprüche 6 oder 7, die Einrichtungen zur Entnahme der im zentralen Kanal (18) zirkulierenden Abgase aufweist, wobei diese Einrichtungen geeignet sind, um die entnommenen Gase über das Filtermedium (19) zum AGR-Ausgang (17) zu lenken.

9. Filtervorrichtung nach Anspruch 8, wobei die Entnahmeeinrichtungen im ersten Zylinder (21) gebildete Perforationen aufweisen und das Filtermedium (19) koaxial um diesen ersten Zylinder herum angeordnet ist.

10. Filtervorrichtung nach einem der Ansprüche 6 bis 9, die Entnahmeeinrichtungen der Abgase in der Nähe des hinteren Flanschs (23B) aufweist, wobei diese Einrichtungen geeignet sind, um die entnommenen Gase über das Filtermedium (19) zum AGR-Ausgang (17) zu lenken.

11. Filtervorrichtung nach Anspruch 10, wobei die Entnahmeeinrichtungen im hinteren Flansch (23B) gebildete Perforationen aufweisen und das Filtermedium (19) in jeweils auf einer Perforation zentrierten Rohren angeordnet ist.

12. Filtervorrichtung nach einem der Ansprüche 1 bis 11, wobei der Körper (14) einen Kegel (26) aufweist, der zum Abgaseingang (15) hin konvergiert.

13. Filtervorrichtung nach Anspruch 12, **dadurch gekennzeichnet, dass** das Filtermedium (19) eine Form eines divergierenden Kegels ausgehend vom Ableitungsausgang (16) der Abgase aufweist, wobei die zwei Kegel zueinander konvergieren und im Bereich einer Öffnung (25) verbunden sind.

14. Vorrichtung nach einem der Ansprüche 1 bis 3, wobei der Körper eine zylindrische Außenhülle (24) enthält und wobei der AGR-Ausgang (17) in der Hülle (24) ausgebildet ist.

15. Vorrichtung nach Anspruch 14, wobei der Körper (14) einen vorderen Flansch (23A) und einen hinteren Flansch (23B) aufweist, die durch einen den Kanal (18) definierenden ersten Zylinder (21) und einen aus der Hülle (24) bestehenden zweiten Zylinder verbunden sind, wobei der AGR-Pfad zwischen dem ersten und dem zweiten Zylinder vorgesehen ist.

16. Vorrichtung nach Anspruch 15, wobei der vordere Flansch (23A) oder der hintere Flansch (23B) mit einer Vielzahl von Perforationen versehen ist, die eine Einführung des Anteils der Abgase erlauben, der die im AGR-Pfad rückgeführten Abgase bildet.

17. Vorrichtung nach Anspruch 16, wobei das Filtermedium (19) aus über eines ihrer Enden mit den Perforationen in Verbindung stehenden Rohren besteht, wobei die Seitenwände der Rohre aus Filtermaterial geformt sind.

18. Vorrichtung nach Anspruch 17, wobei jedes Rohr des Filtermediums (19) auf eine Perforation zentriert ist und sich entlang der Längsachse des Kanals (18) erstreckt.

19. Vorrichtung nach Anspruch 18, wobei die Rohre sich zwischen den Flanschen erstrecken und an ihrem anderen Ende von dem Flansch verschlossen werden, der nicht die Vielzahl von Perforationen trägt.

20. Vorrichtung nach Anspruch 14, wobei das Filtermedium in Form eines Rings vorliegt, der sich in einer zur Außenhülle (24) geneigten oder lotrechten Ebene erstreckt.

21. Vorrichtung nach Anspruch 20, wobei der Körper einen so genannten Eingangskegelstumpf (26) enthält, der im Bereich seiner großen Basis einen Eingang für die Abgase in den Körper (14) definiert.

22. Vorrichtung nach Anspruch 21, wobei der Eingangskegelstumpf (26) zu einem Kanal (18) konvergiert, der einen Durchgang für die Abgase definiert, wobei das zwischen dem Kanal (18), dem Eingangskegelstumpf (26) und der Außenhülle (24) des Körpers definierte Volumen im unteren Teil vom Filtermedium (19) verschlossen wird.

23. Vorrichtung nach Anspruch 22, wobei das Filtermedium (19) eine Kegelstumpfform aufweist, die ausgehend von der kleinen Basis des Eingangskegelstumpfs (26) divergiert, wobei die Kegelstümpfe im Bereich einer Öffnung (25) verbunden sind.

24. Vorrichtung nach Anspruch 14, wobei der Körper eine torusförmige Kammer (100) aufweist, deren Seitenwände vom Filtermedium (19) definiert werden.

25. Vorrichtung nach Anspruch 14, wobei das Filtermedium eine Vielzahl von Ringen (210) enthält, wobei die Ringe (210) im Abstand zueinander entlang der Längsachse des Körpers vorgesehen sind, wobei jeder Ring (210) eine Seite gegenüber einem Volumen, das mit einem Kanal (218) verbunden ist, der den anderen Anteil der Abgase zu einem Ausgang (220) der Gase lenkt, und eine Seite gegenüber einem Volumen aufweist, das mit dem AGR-Ausgang (17) verbunden ist.

26. Abgasrückführsystem für einen Verbrennungsmotor, enthaltend: eine Abgasleitung (6) für den Verbrennungsmotor (1), die mit einem Partikelfilter (8) versehen ist, eine Einlassleitung (5) für den Verbrennungsmotor (1), eine AGR-Leitung (9), die über eines ihrer Enden mit der Abgasleitung (6) hinter dem Partikelfilter (5) und über das andere ihrer Enden mit der Einlassleitung (5) verbunden ist, **dadurch gekennzeichnet, dass** es außerdem eine Filtervorrichtung (12) nach einem der Ansprüche 4 bis 13 aufweist, die in der Abgasleitung (6) in der Nähe des Ausgangs des Partikelfilters (8) angeordnet ist, und dass die AGR-Leitung (9) mit dem AGR-Ausgang (17) der Filtervorrichtung (12) verbunden ist.

27. AGR-System nach Anspruch 26, das außerdem Einrichtungen zur Filterregenerierung durch Temperaturerhöhung aufweist, wobei diese Regenerierungseinrichtungen periodisch auf den Partikelfilter (8) und auf die Filtervorrichtung (12) einwirken.

28. Verfahren zur Reinigung der Filtervorrichtung eines Systems nach einem der Ansprüche 26 oder 27, **dadurch gekennzeichnet, dass** es den Schritt der Regenerierung des Partikelfilters (8) durch Erhöhen der Temperatur aufweist, wobei diese Regenerierung die Reinigung der Filtervorrichtung (12) mit sich bringt.

## Claims

1. Device for filtering exhaust gases from a heat engine (1), in particular a diesel engine, said device comprising a body (14) and a filtering medium (19), forming filtration means, **characterised in that** said body is capable of guiding a proportion of said exhaust gases, known as recirculated exhaust gases, through said filtering medium (19), said body (14) having an exhaust gas inlet (15), an exhaust gas outlet (16) and an EGR outlet (17), said body (14) being equipped with a duct, known as an EGR duct, for circulating said recirculated exhaust gases, said EGR duct comprising said filtering medium (19), and with a duct, known as an exhaust duct, for circulating the other proportion of the exhaust gases, the body (14) comprising a central channel (18) which opens out on either side of the body (14), one open end of this central channel defining said exhaust gas inlet (15) and the other open end of this central channel defining said outlet (16) for evacuating the exhaust gases.

2. Filtration device according to claim 1, wherein said filtration means (14, 19) are suitable for treating the gases circulating between a particulate filter (8) and an EGR exchanger (10).

3. Filtration device according to either claim 1 or claim 2, **characterised in that** the body (14) is a suitable part for disposal inside the exhaust conduit (6) of a heat engine (1).

4. Filtration device according to claim 1, wherein the EGR outlet (17) comprises an orifice formed on the periphery of said body (14) in the form of an annular part.

5. Filtration device according to claim 1, wherein the body (14) is a tube of which the wall is hollow and encloses the filtering medium (19) and of which the central empty space constitutes said central channel (18).

6. Filtration device according to claim 5, wherein the tubular body (14) comprises an upstream flange (23A) and a downstream flange (23B) which are connected by a first cylinder (21) which constitutes the internal periphery of said hollow wall and defines said central channel (18).

7. Filtration device according to either claim 5 or claim 6, wherein the body (14) further comprises a second cylinder (24) which constitutes the external periphery of said hollow wall, this second cylinder comprising an orifice (17) which defines the EGR outlet.

8. Filtration device according to either claim 6 or claim 7, comprising means for sampling the exhaust gases circulating in the central channel (18), these means being suitable for guiding said sampled gases towards the EGR outlet (17) via the filtering medium (19).

9. Filtration device according to claim 8, wherein the sampling means comprise perforations formed in the first cylinder (21) and wherein the filtering medium (19) is arranged coaxially around this first cylinder.

10. Filtration device according to any of claims 6 to 9, comprising means for sampling the exhaust gases in the vicinity of the downstream flange (23B), these means being suitable for guiding said sampled gases towards the EGR outlet (17) via the filtering medium (19).

11. Filtration device according to claim 10, wherein the sampling means comprise perforations formed in the downstream flange (23B) and wherein the filtering medium (19) is arranged in tubes, each of which is centred on a perforation.

12. Filtration device according to any of claims 1 to 11, wherein the body (14) comprises a cone (26) which converges towards the exhaust gas inlet (15).

13. Filtration device according to claim 12, **characterised in that** the filtering medium (19) is in the shape of a cone which diverges from the outlet (16) for evacuating the exhaust gases, the two cones converging towards one another and being connected at an opening (25).

14. Device according to any of claims 1 to 3, wherein said body comprises a cylindrical external casing (24) and wherein the EGR outlet (17) is formed on said casing (24).

15. Device according to claim 14, wherein the body (14) comprises an upstream flange (23A) and a downstream flange (23B) which are connected by a first cylinder (21) which defines said channel (18) and a second cylinder formed by said casing (24), said EGR duct being provided between said first and second cylinders.

16. Device according to claim 15, wherein either the upstream flange (23A) or the downstream flange (23B) is equipped with a plurality of perforations allowing the proportion of the exhaust gases constituting said recirculated exhaust gases to be introduced into the EGR duct.

17. Device according to claim 16, wherein the filtration medium (19) is formed by tubes which communicate via one of their ends with said perforations, the lateral walls of the tubes being made of filtering material.

18. Device according to claim 17, wherein each tube of the filtering medium (19) is centred on one said perforation and extends along the longitudinal axis of the channel (18).

19. Device according to claim 18, wherein said tubes extend between said flanges and are closed at their other end by the flange which does not have said plurality of perforations.

20. Device according to claim 14, wherein the filtering medium is in the form of a ring which extends in a plane which is inclined or perpendicular to the external casing (24).

21. Device according to claim 20, wherein said body comprises a cone frustum (26), known as an inlet cone frustum, the large base of which defines an inlet for the exhaust gases into said body (14).

22. Device according to claim 21, wherein said inlet cone frustum (26) converges towards a channel (18), defining a passage for the exhaust gases, the volume defined between said channel (18), said inlet cone frustum (26) and said external casing (24) of the body being closed at the bottom by said filtering medium (19).

23. Device according to claim 22, wherein the filtering medium (19) is in the form of a cone frustum which diverges from the small base of said inlet cone frustum (26), said cone frustums being connected at an opening (25).

24. Device according to claim 14, wherein said body has a doughnut-shaped chamber (100) of which the lateral walls are defined by said filtering medium (19).

25. Device according to claim 14, wherein said filtering medium comprises a plurality of rings (210), said rings (210) being provided with mutual spacing along the longitudinal axis of said body, each ring (210) having a face which faces a volume connected to a channel (218) which guides said other proportion of the exhaust gases towards an outlet (220) for said gases and a face which faces a volume connected to the EGR outlet (17).

26. Exhaust gas recirculation system for a heat engine, comprising: an exhaust conduit (6) for the heat engine (1), which exhaust conduit is equipped with a particulate filter (8), an intake conduit (5) for the heat engine (1), an EGR conduit (9) which is connected via one end to the exhaust conduit (6), downstream from the particulate filter (8), and via the other end to the intake conduit (5), **characterised in that** it further comprises a filtration device (12) according to any of claims 4 to 13 which is arranged in the exhaust conduit (6) in the vicinity of the outlet of the particulate filter (8), and **in that** the EGR conduit (9) is connected to the EGR outlet (17) of the filtration device (12).

27. EGR system according to claim 26, further comprising means for filter regeneration via an increase in temperature, these regeneration means acting periodically on the particulate filter (8) and on said filtration device (12).

28. Method for cleaning the filtration device of a system according to either claim 26 or claim 27, **characterised in that** it comprises the step of regenerating the particulate filter (8) via an increase in temperature, this regeneration resufting in the cleaning of the filtration device (12).
